Europäisches Patentamt

European Patent Office

Office européen des brevets

(19)

(11) Publication number: **0 425 321 A2**

## (12) EUROPEAN PATENT APPLICATION

(21) Application number: 90311847.9

(51) Int. Cl.5: **G11B 7/00, G11B 7/24**

(22) Date of filing: 29.10.90

(30) Priority: 27.10.89 US 428135

(43) Date of publication of application:
02.05.91 Bulletin 91/18

(84) Designated Contracting States:
**DE FR GB**

(71) Applicant: **THE MEAD CORPORATION**
**Mead World Headquarters Courthouse Plaza**
**Northeast**
**Dayton Ohio 45463(US)**

(72) Inventor: **Larson, Brent D.**
**4436 Bellemeade Drive**
**Bellbrook, Ohio 45305(US)**

(74) Representative: **Deans, Michael John Percy et al**
**Lloyd Wise, Tregear & CO. Norman House**
**105-109 Strand**
**London WC2R OAE(GB)**

(54) Liquid crystal cells and their use for recording information or for projecting an image.

(57) Apparatus incorporating a liquid crystal cell which includes first and second substrates defining opposite sides of the cell is described for recording information. A layer of a liquid crystal material of a smectic-A type is disposed between the substrates. The cell is designed to create a birefringent effect in the liquid crystal material, whereby polarized light of a wavelength other than a first wavelength has the polarization of the light rotated by passing the written areas of the liquid crystal material. This rotation is caused by a homogeneous alignment of the liquid crystal molecules wherein the molecules are oriented substantially parallel to themselves and the plane of the substrates. Such effect may be achieved by employing a thickness of the liquid crystal material significantly below conventional values.

**FIG. 2**

EP 0 425 321 A2

# LIQUID CRYSTAL CELLS AND THEIR USE FOR RECORDING INFORMATION OR FOR PROJECTING AN IMAGE

In related aspects thereof, the present invention relates to liquid crystal cells and to apparatus for recording information and to apparatus for projecting an image.

One particular class of liquid crystal materials, known as smectic liquid crystals, are particularly suited for use in devices requiring an information storage capability. These devices can be written by altering their optical transmittance, and the image information need be written onto the cell only once. The written information is thereafter essentially permanent until erased.

Liquid crystal light modulators have been developed utilizing smectic materials, and particularly smectic-A materials, as high-resolution projection display devices. The writing mechanism on these devices is primarily thermal, although an electric field may also be used for writing. In an example of typical, known systems, a focused infrared laser beam is used to heat the smectic liquid crystal material into the isotropic state. Afterwards, the liquid crystal is cooled back to the smectic state and forms a light-scattering region. The written scattering region is stable within the smectic temperature range of the specific liquid crystal material, and the written information will be preserved. The cell can then be erased by an electric field, or by a combination effect of heating and an applied electric field.

In one use for such a cell, light may be projected onto the cell following writing of the cell, whereby any information written can in turn be projected onto a display screen, a photosensitive material, a detector or the like. A variety of such display devices are discussed in Dewey, "Laser-Addressed Liquid Crystal Displays," Optical Engineering 23(3), 230-240 (May/June 1984).

Such devices, wherein the written information is visible as a result of scattering of the projection beam, are not without disadvantages. The writing speed of such a device may be slow, requiring the use of complex absorber structures such as that shown in U.S. patent No. 4,787,713 of Lu et al. Increases in spatial resolution generally come at the expense of contrast, gray scale and writing speed. For example, devices which lose contrast in the dot size range of 10-12 microns might be limited to approximately 1500 dots per inch. In addition, high contrast is difficult to achieve for projection beams in the red visible portion of the spectrum. Overall contrast is quite dependent upon the projection optics used. Moreover, for a finite volume projection lamp, the maximizing of contrast and projection beam throughput are competing goals. Further, such devices are sensitive to surface alignment conditions which can cause nonuniformities.

Alternate devices which apparently improve writing sensitivity and signal-to-noise ratio for optical data storage applications are disclosed in U.S. patent No. 4,752,820 of Kuroiwa et al. However, such devices use a high-dielectric smectic material, such as chiral smectic-C (known as Sm-C*) material, which exhibit a spontaneous polarization. The writing mechanism in these devices produces a shift in molecular orientation within a plane parallel to the cell substrates. This is in contrast to smectic-A devices wherein the molecular orientation in unwritten cells is perpendicular to the cell substrate.

What is needed are systems utilizing a smectic-A liquid crystal material particularly for use in recording and projecting image information which overcome the disadvantages described above.

The present invention has arisen from our work seeking to meet this need.

According to a first aspect of this invention, we provide apparatus for recording information, comprising: a liquid crystal cell, including first and second generally planar substrates disposed to define opposite sides of said cell, and a layer of a liquid crystal material of a smectic-A type comprised of liquid crystal molecules and disposed between said first and second substrates; the apparatus being characterised in that said liquid crystal cell further includes homeotropic alignment means responsive to a first stimulation to produce a homeotropic alignment of said liquid crystal molecules with said molecules oriented substantially normal to said substrates, and homogeneous alignment means responsive to a second stimulation to produce a homogeneous alignment of said liquid crystal molecules with said molecules oriented substantially parallel to each other and to said substrates; and in that said apparatus further comprises first stimulation means adapted for operatively selectively stimulating said homeotropic alignment means in at least a portion of said liquid crystal material, and second stimulation means adapted for operatively selectively stimulating said homogeneous alignment means in at least a portion of said liquid crystal material.

The homogeneous alignment means may include heating means disposed between the first and second substrates for generating heat in response to the second stimulation means. In one case, the second stimulation means may include light source means for directing a beam of light onto the cell. Alternatively, where the heating means includes electrical resistance means for generating heat in response to passage of electric current therethrough, the second stimulation means may include current supply and control means for controlling application of current to the resistance means in accordance with information to be recorded.

The homogeneous alignment means may include first and second electrode means for generating an electric field therebetween, and the second stimulation means may include electrical supply and control means for controlling application of electrical charge to the electrode means in accordance with information to be recorded. The first and second electrode means may be disposed in an alternating arrangement within the liquid crystal layer. Alternatively, the first and second electrode means may be disposed in an alternating arrangement adjacent the liquid crystal layer.

The homeotropic alignment means may include means for creating an electric field across the liquid crystal layer. In such a case, the means for creating an electric field may include first and second electrode layers disposed on opposite sides of the liquid crystal layer, and the first stimulation means may include electrical supply and control means for controlling application of electrical charge to the electrode layers.

The means for creating an electric field may alternately include a layer of a photoelectric material disposed within the cell, the first stimulation means including means for selectively directing a beam of light onto the cell. As a further alternative, the first and second electrode layers may be formed as continuous layers of a conductive material. Still further, the first and second electrode layers may define an electrode matrix.

An alternate homeotropic alignment means includes heating means disposed between the first and second substrates for generating heat in response to the first stimulation means. In this case, the first stimulation means may include light source means for directing a beam of light onto the cell.

The thickness of the layer of the liquid crystal material is suitably not more than approximately 5 microns.

The cell may further include alignment layer means disposed between the first and second substrates for causing alignment in a predetermined direction of the molecules within the homogeneous alignment.

With the homogenous alignment, a birefringent effect in the liquid crystal material is produced, whereby polarized light of a wavelength used for projecting the information or for otherwise reading the information recorded on the cell has the polarization of the light rotated by passing the written areas of the liquid crystal material.

In accordance with a second and alternative aspect of the invention, we provide apparatus for recording information, comprising a liquid crystal cell, including first and second substrates disposed to define opposite sides of said cell, and a layer of a liquid crystal material of a smectic-A type disposed between said first and second substrates; the apparatus being characterised in that said liquid crystal cell further includes heating means disposed between said first and second substrates and adapted for generating heat in response to stimulation to form written areas within said liquid crystal material; in that said apparatus further includes stimulating means for stimulating selected areas of said liquid crystal cell in accordance with the information to be recorded; and in that a birefringent effect is produced in said liquid crystal material whereby polarized light has the polarization thereof rotated by said written areas of said liquid crystal material.

The stimulating means may include a laser source means for generating a laser writing beam and for directing the writing beam on to the cell. Laser modulating means modulates the writing beam in accordance with the information to be written on to the cell, and a laser scanning means scans the writing beam over a surface of the cell.

The thickness of the layer of the liquid crystal material is again suitably not more than approximately 5 microns.

The invention also provides, in a third alternative aspect thereof, apparatus for projecting an image, comprising a laser-addressable, liquid crystal cell, including first and second substrates disposed to define opposite sides of said cell and a layer of a liquid crystal material of a smectic-A type disposed between said first and second substrates; the apparatus being characterized in that said liquid crystal cell further includes means disposed between said first and second substrates and adapted for absorbing laser light of at least a first wavelength to thereby generate heat to form written areas within said liquid crystal material; in that a birefringent effect is produced in said liquid crystal material whereby polarized light of a wavelength other than said first wavelength has the polarization of said light rotated by said written areas of said liquid crystal material; and in that said apparatus further comprises first polarizing means positioned for operatively receiving and polarizing a beam of light of said other wavelength incident thereon and directing said beam on to said liquid crystal cell, and second polarizing means positioned for operatively receiving said beam of light from said liquid crystal cell and blocking from passing therethrough one of the portions of said beam of light which passes through said written areas of said cell and which passes through unwritten areas of said cell.

In this projection system, the first and second polarizing means may define therebetween a polarizing angle of 90°, whereby the second polarizing means passes therethrough light corresponding to the written areas of the cell. Alternately, the first and second polarizing means may define therebetween a polarizing angle of O°, whereby the second polarizing means passes therethrough light corresponding to the unwritten areas of the cell.

Further in the projecting system, the liquid crystal cell may be transmissive, in which case the polarization of the light is rotated by passing the light through the written areas of the liquid crystal material. Alternately, the liquid crystal may include a reflective layer, and the polarization of the light is then rotated by reflecting the light from the liquid crystal cell.

In a fourth alternative aspect thereof, the invention provides a liquid crystal cell of the smectic-A type characterised in that the thickness of the liquid crystal material is sufficiently thin that in the written state the material is essentially birefringent to transmitted or reflected light.

According to a fifth and further alternative aspect of the invention, there is provided a liquid crystal cell of the smectic-A type characterised in that the thickness of the liquid crystal material is sufficiently thin that in the written state the molecules of the said material are generally aligned in a direction normal to the thickness of the material.

As will become clear from the description below, embodiments of our apparatus can readily be produced using smectic-A liquid crystal materials and techniques which are known, but in which the cell produces greater contrast than known cells of the smectic-A type, may be written at greater speeds than known cells, and is capable of greater spatial resolution than known cells. Embodiments can be provided wherein the cell is written by creating either or both homogeneous and homeotropic alignments of the molecules of the liquid crystal material. The apparatus may operate by producing a birefringent effect on projection light passing through or reflected from the written cell.

The invention is hereinafter more particularly described by way of example only, with reference to the accompanying drawings, in which:-

FIG. 1 is a sectional, schematic view of a portion of a known, smectic-A liquid crystal cell illustrating the scattering writing mechanism;

FIG. 2 is a sectional, schematic view similar to FIG. 1 of a portion of an embodiment of smectic-A cell in accordance with the present invention, illustrating the birefringent writing mechanism;

FIG. 3 is a schematic view of a writing system specially for use with the cell of FIG. 2;

FIGS. 4A and 4B are sectional, schematic views of electrically-addressable cells also according to the present invention;

FIG. 5 is a schematic view of a projection system specially for use with the cell of FIG. 2; and

FIG. 6 is a sectional, schematic view of a cell in accordance with the present invention adapted for use in a data storage system.

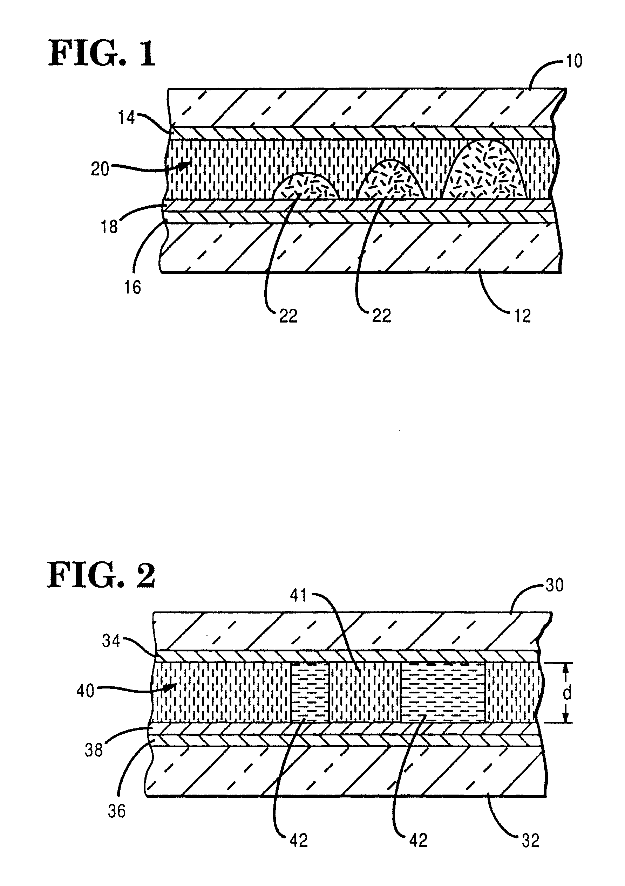

In order to place the present invention in context, it will be helpful to review a typical liquid crystal cell utilizing the smectic-A phase for modulation of light. Such a known device can be seen by reference to FIG. 1. A pair of glass substrates 10 and 12 each have conductive layer 14 and 16, respectively, formed thereon. The conductive layer may be formed, for example, from indium-tin oxide, and is used to apply an electric field to the cell for erasure purposes. Formed in conjunction with layer 16 is an absorber layer 18, which in this particular device includes an appropriate means for receiving an infrared writing beam incident thereon, and converting the beam to heat for writing on the liquid crystal material. Such absorber layer may be one of a variety of structures, with a multi-layer structure being shown in U.S. patent No. 4,787,713. Alternatively, an infrared absorbing dye may be doped into the liquid crystal material in place of or in conjunction with absorber layer 18.

The liquid crystal material itself forms layer 20, disposed between layers 14 and 18.

Also included within the cell may be means to facilitate the projection of the written image, such as where the cell is used as a mask for projecting image information onto a photosensitive media. This means will depend in part upon the projection arrangement for the cell. A reflective layer (not shown) may be used for cells wherein the image information is written onto one side with the projection beam being reflected from the other side of the cell onto a photosensitive medium. Alternatively, the absorber layer 18 may be made transparent to the projection light, whereupon the cell may be operated in a transmissive projection mode.

Commonly, in known smectic-A devices, two states of molecular alignment within the liquid crystal material are significant. In the homeotropic state, all molecules within the bulk of the material are aligned perpendicular to the glass substrates 10 and 12. Thus, molecules have a negligible effect on light passing therethrough, and the device appears clear, thereby defining an erased state. In the written state, the liquid crystal material is heated, usually into a less-ordered mesophase, and then cooled. The molecules, which have their orientations randomized during heating, retain this orientation as the liquid crystal cools. Consequently, many scattering regions 22 are produced in the liquid crystal material, which scatters incident light effectively as a result of the random refractive index of the material within the regions.

A typical scattering smectic-A cell has a gap between the substrates 10 and 12 in the order of 8 to 30 microns.

An example of a liquid crystal cell in accordance with the present invention is shown in FIG. 2. Such a device functions in a birefringent mode rather than the scattering mode previously described. As with the known cell, the cell of FIG. 2 includes glass substrates 30 and 32, along with metallic oxide conducting layers 34 and 36. An inorganic absorber layer 38, preferably formed in accordance with the teachings of U.S. patent No. 4,787,713, is formed onto conductive layer 36. A smectic-A liquid crystal material 40 fills the gap between layers 34 and 38.

The device shows the same homeotropic state within the erased condition as shown at 41 in FIG. 2. However, when written, the molecules of such a cell orient primarily in the same direction and parallel to the substrates 30 and 32, such arrangement referred to as a homogeneous alignment as shown at 42. It has been found that this birefringent behavior can be produced by reducing the gap spacing within which the smectic-A liquid crystal material is placed to well below the normal size. For the preferred liquid crystal mixture and writing conditions, described in detail below, homogeneous alignment can be produced when the gap spacing is less than approximately five microns. It is expected that this dimension is dependent upon a number of factors, including surface conditions, writing mechanism, cooling rate, bias temperature, electric field strength and the general defect structures formed by a particular liquid crystal mixture or compound.

The cell is described hereinbelow as a laser-written cell. However, other writing mechanisms are usable, and will be discussed below.

For a laser-addressed cell, and in addition to thickness of the liquid crystal layer, the homogeneous alignment may be enhanced by controlling the writing beam parameters, particularly writing beam direction and speed. In such a case, the linear scanning of the laser beam will induce molecular alignment in the direction of scanning. Because alignment can be less complete at beginning and ending portions of a beam scan, special data compensation techniques may be used. Examples include writing a larger area than desired, imaging with line segments rather than dots, or utilizing a combination of pulse width and amplitude modulation. Alternately, a selective erasure technique of the beginning and end scan portions can be used, such as described by U.S. Patent No. 3,796,999 of Kahn. Further, an overall flood scan of the cell may be used, with the image information defined by selectively erased areas.

To further enhance alignment, and thereby to increase contrast, one or more alignment layers may be added to the cell. Such layers are known in the art, with an example being obliquely deposited $SiO_x$ as described in U.S. Patent No. 4,165,923.

In one working example of a laser-addressed liquid crystal cell, conductive layers 34 and 36 are formed from indium-tin oxide, and the absorber layer 38 is tuned to exhibit nearly complete absorption at 830 nm. The substrates are disposed parallel and separated by a gap "d", which is filled with a smectic-A mixture commercially available from E.M. Chemicals, and designated as "S2".

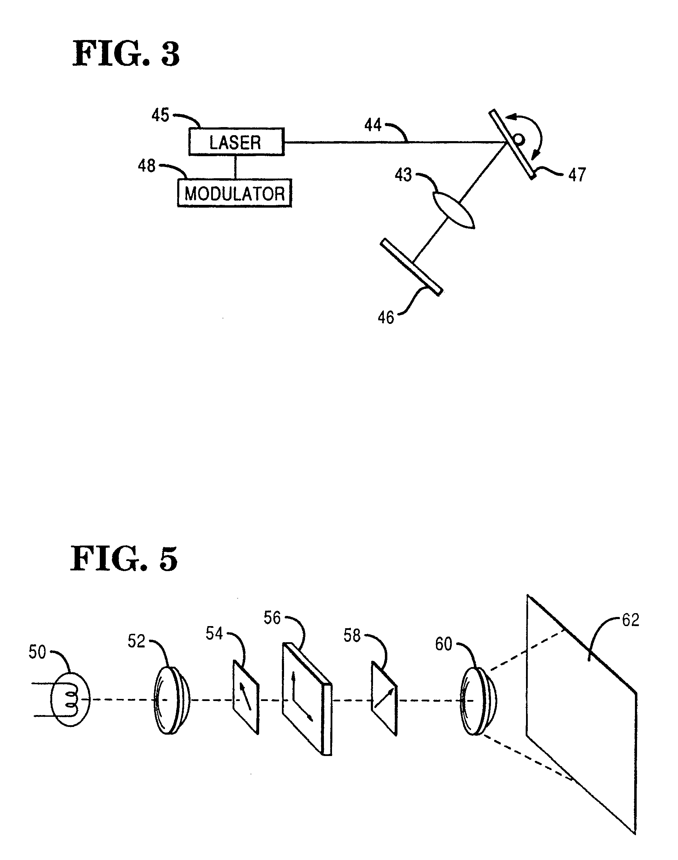

The cell is written as shown in Fig. 3 by directing a beam 44, preferably from a laser source 45, through focusing means 43 and onto the substrate surface of the cell 46. The beam is both scanned over the cell by a scanning mirror 47 or the like, and modulated during scanning by appropriate means 48 in accordance with the image information with which the cell is to be written. Techniques and apparatus for laser writing of cells are well known, with one detailed description of such being set forth in European Published Application No. 0 291 300, the disclosure of which is to be regarded as hereby incorporated by reference. After writing, the cell will have written areas formed therein corresponding to the image information.

For the working example described above, the cell may be written with a 20-milliwatt 830 nm focused, pulsewidth-modulated laser beam, approximately 20 micron beamwaist, at a scanning speed of 0.5 meters per second. In such a case, the cell is preferably maintained at a bias temperature of approximately 44 °C.

Under these conditions, with a gap "d" of larger than 9 microns, conventional scattering mode behavior for the device is observed. If the gap is reduced to below 5 microns, a mixture of birefringent and scattering behavior may be noted. As the gap spacing is decreased, the birefringent, homogeneous alignment dominates, although some scattering may still be observed.

Optimum performance with the described exemplary device appeared to be achieved in a region where the gap is approximately 1-2 microns.

While the exemplary cell described herein utilizes the multilayer, inorganic absorber described in U.S. patent No. 4,787,713, an alternate form of absorber may be used where writing speed is not highly critical. In such a case, a simpler structure may be used, for example a thin metallic layer. Such an alternative would simplify cell fabrication, thereby also reducing the expense of the cell. As a further alternative, a standard reflective type absorber may be used. Moreover, the absorber layer may be replaced by or supplemented by an appropriate dye doped into the liquid crystal material.

Virtually all techniques, implementations, improvements and uses developed for traditional, scattering type devices may be used with the birefringent cell described herein. For example, gray scale resulting from dot size modulation, as described in European Published Application No. 0 291 300 may be used. Other examples include selective erase by rewriting certain portions of the cell with a field applied, thermal insulating layers or substrates, organic absorber layers, laser-absorbing or contrast-enhancing dyes in solution with the liquid crystal material, tuning to alternate wavelengths, incorporation of photoconductor heating, may all be used.

As previously noted, the present invention may employ other cell-writing mechanisms. For example, other light sources may be used for heating. The homogenous orientation may be generated using an overall exposure, such as with an electronic xenon flash source. The light may be a flood exposure, or an imaged exposure though a halftone or other mask. Alignment layers may provide better results, but are not required.

Other means for heating the liquid crystal material for creating written areas may be used. Fot example, a plurality of lines or other elements of electrical resistance may be formed on the liquid crystal cell. Such structure may be formed from a layer of resistive material etched or otherwise configured into a series of lines or a plurality of picture elements. Application of current to selective lines and elements will generate heat within the resistive material and hence in the liquid crystal layer, thereby producing the homogeneous orientation to define written areas in the cell.

Other usable heating means may include a contact mechanism, such as a thermal print head or a heating head, or even a hot air blower. In any case, as the device cools, the homogeneous birefringent texture is obtained, so long as an appropriate thermal profile is maintained and/or appropriate alignment layers are used.

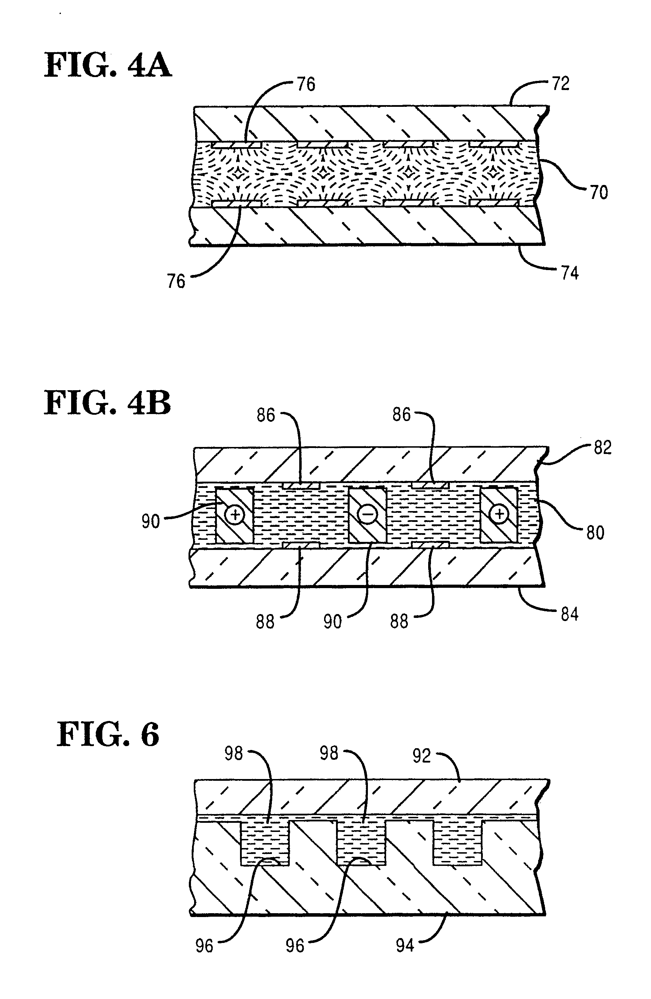

Cell writing may also be accomplished by the application of an electric field to the liquid crystal material. As is known, order parameter reorientation in liquid crystal materials may be caused by application of such a field instead of or in addition to heating. simplified cells illustrating the operation of this mechanism for writing may be seen by reference to FIGS. 4A and 4B. In FIG. 4A, a layer of liquid crystal material 70 is disposed between substrates 72 and 74. Positioned at the liquid crystal/substrate interface are a plurality of thin electrodes 76. As is shown in FIG. 4A, a homogeneous alignment is produced at least at the boundary between the liquid crystal and substrates by the application of alternating positive and negative charges. The homeotropic orientation can be achieved by switching all electrodes 76 adjacent one of the substrates 72 to positive and all of the electrodes 76 adjacent the opposite substrate 74 to negative. Electrodes 76 may be activated by conventional addressing techniques.

The homogeneous orientation can be more uniformly created, and hence a better contrast achieved with the device, using the cell shown in FIG. 4B. The liquid crystal material 80 is positioned between substrates 82 and 84. A plurality of thin electrodes 86 are positioned adjacent substrate 82, and a plurality of similar electrodes 88 are positioned adjacent substrate 84. Other electrodes 90 are embedded in or extend essentially through the liquid crystal layer 80.

Application of positive and negative charges to alternate electrodes 90 produces the homogeneous alignment shown in FIG. 4B. The homeotropic alignment may be achieved by applying opposite charges to the electrodes 86 and 88. Again, the electrodes are addressed using conventional matrix addressing or other techniques.

An electrode matrix may be formed by providing thin, linear electrodes similar to electrodes 86 in FIG. 4B which extend across a cell in the x-direction. Electrodes located in the liquid crystal layer, similar to electrodes 90, extend across the cell in the y-direction.

Other electrode means may be used to create and modulate the electric field across the liquid crystal layer. Such means may include various electrode structures or $\Delta\epsilon$ materials, depending upon cell structure and/or particular liquid crystal materials.

Of course, combinations of any of the foregoing writing mechanisms may be used. Also, surface alignment means for the liquid crystal molecules may be incorporated.

Alternatives may also be used for generating the homeotropic molecular orientation, used to obtain erasure of the cell. In addition to the overall erasure provided by applying a sufficiently high voltage between the conductor layers of the cell, selective erasure may be achieved by standard matrix addressing techniques. A conventional electrode matrix layer is incorporated into the cell. Because of the nature of the homeotropic orientation, it is sufficient simply to create a field across the cell at the region where erasure is desired.

A combined thermal and electric erase may be achieved by using any of the cell heating techniques described above for use in cell writing, in conjunction with an erase field. As will be readily apparent, these techniques may be used to provide either a selective or overall erasure.

As a further alternative, a photoelectric mechanism may be used wherein a photoelectric layer is incorporated into the cell along with an electrode layer. In this embodiment, a selective erasure may be achieved by scanning a laser writing beam across the photoelectric layer, which responds by generating an electric field across the liquid crystal corresponding to the modulation of the beam. The presence of the field causes reorientation of the liquid crystal molecules into the homeotropic mode. A complete erasure may be achieved by a flood exposure of the photoelectric layer, which in turn produces an electric field across the entire cell. Further details regarding photoelectric writing mechanisms may be seen by reference to U.S. patent No. 3,824,002.

A combination of the photoconductor and matrix techniques may be used, wherein an electrode matrix is applied to the cell. Photoconductive material is incorporated into the columns and/or rows of the matrix electrodes, for example at the ends of the rows and columns. A single row of laser scanning may then be used to address each axis of the matrix.

Further alternatives will be readily apparent to those skilled in the art.

An important use for the liquid crystal cell of the present invention is for the storage of image information. The image information written onto the cell may be viewed or displayed directly on the cell, but may also be subsequently projected for purposes of viewing, exposing photosensitive materials, image data analysis, optical data processing and the like. With conventional scattering mode smectic-A cells, a projection beam is directed onto the cell for passage therethrough or reflection therefrom. The projection beam, now containing the image information, may be directed onto a screen, a recording media or other appropriate surface. The projection beam acquires the image information by scattering that portion of the beam directed onto the written areas.

Alternately, where contrast enhancing dyes are used, the projection beam can acquire image information by selective absorption of the beam, or by a combination of scattering and absorption effects.

The birefringent cell described above enables projection of the image information in reliance on the molecular behavior of the cell in the written and unwritten areas of the cell. One such arrangement for projecting the information can be seen by reference to FIG. 5.

It will be recognized that, for light polarized at an angle of $\pm 45°$, the birefringent effect of the homogeneous regions within a cell of appropriate thickness will result in the polarization of the light incident on these cell regions being rotated through $90°$. A lamp or other appropriate source 50 produces an unpolarized projection beam of white light which is directed through a condenser lens 52. The light is then received by a polarizer 54, and thereafter is directed onto a transmissive liquid crystal 56 constructed in accordance with the invention. A second polarizer 58 receives the light passing through cell 56, whereafter the light is directed into a projection lens 60 and onto the projection surface 62.

A similar system may be used with a reflective cell, with the light incident onto the liquid crystal cell being reflected therefrom and through the second polarizer 58.

Polarizers 54 and 58 are placed at $\pm 45°$ from the optic axis of the written image. In the unwritten area, the crossed polarizers 54 and 58 will result in a black area on the projection surface 62. In the written area, the birefringent liquid crystal cell 56 will convert the linearly polarized light to elliptically polarized light (in the general case). In a special, and generally preferred case, the gap within the cell is adjusted to give a half-wave retardation at the wavelength of interest as the light passes through cell 56. The polarization of the light is then rotated $90°$, whereby all of the light corresponding to the written areas will pass through the second polarizer 58.

Rather than the crossed polarizers described above, it is also possible to utilize uncrossed polarizers for polarizers 54 and 58. In such a case, the second polarizer 58 passes light corresponding to the unwritten areas of cell 56, thereby producing a negative image on projection.

In designing birefringent cells in accordance with the present invention, many possible combinations of gap spacing and liquid crystal birefringence are possible. However, optimum white light performance in a projection system is expected when cell gap thickness is adjusted for a single half-wave retardation in the middle of the visible spectrum. For typical observed birefringence of $n_e - n_o = 0.2$, and for a transmissive cell, cell thickness would be expected to approximate 1.25 microns.

By writing two areas of the cell to have different molecular alignment angles, a perceived gray-scale may be between the two areas when using the described projection system. This effect may be utilized to write images having multiple gray levels, and is particularly suitable for use with vector-scanning writing system.

Contrast in such a device as described herein can be quite high along the projection beam axis. Scattering effects in a traditional smectic-A device can result in low contrast at longer wavelengths, whereas in the birefringent device described herein, such effects are not present. Additionally, again compared to known smectic-A devices, contrast in the device is relatively independent of the f-number of the projection optics, so that a larger projection source can be used. Consequently, simultaneous optimization of contrast ratio, throughput and II.II uniformity are facilitated.

It will be readily apparent that the foregoing projection system may be adapted for use with a reflective cell, i.e., a cell having a reflective layer incorporated therein such that the projection beam is input to and output from the cell on the same side of the cell. Because the output beam traverses the same path (but in reverse) as the input projection beam, a polarizing beam splitter may be disposed along the beam path in order to deflect the output beam to an image plane.

It will also be readily recognized that liquid crystal cells in accordance with the present invention may be used in other than image projection system. For example, the cells may be used directly as a display device, or may be incorporated into other optical systems to function as a light valve or photomask.

One other important usage of the birefringent cell described herein is as a part of an optical memory system. Such a device is similar in construction to know liquid crystal optical data storage devices, except that the device operates in the birefringent mode described herein.

While any number of device structures may be used, in a preferred embodiment the liquid crystal cell is constructed in the form of a disk, which may be spun at relatively high speeds past a radial motion optical head. The design of such an optical head is well known, for example in connection with the design of read only compact disk data storage systems. In the present arrangement, of course, the optical head is required to both write and read data, but the same laser source may be used for both writing and reading, the source being operated at a lower intensity for reading.

Further details regarding the design of such systems, for use with known liquid crystal cells, may be seen by reference to U.S. patent No. 4,405,993.

The disk, while formed generally in accordance with the manner previously described wherein for liquid crystal cells, may require modification for use in the optical date storage system. For example, one substrate may be a reflective material such as aluminum or a dielectric material. This is necessary if a reflective mode of data reading is to be used.

Particularly due to the relative large size of the optical disk, spacers may be required to maintain the gap spacing within the cell which is filled by the liquid crystal material. The uniformity of spacer dimensions is not as critical as in the case of a cell used for imaging, since only binary data is typically being detected. Indexing marks may also need to be incorporated into the cell, to permit accurate location of data pixels for both writing and readout.

Several alternative structures are available. An unformatted disk may be provided wherein all formatting of data written on the disk is accomplished by control of the writing system. This results in a relatively less expensive disk, but relatively more expensive writing control system. Alternatively, a formatted disk may be provided wherein the format pattern is created in the reflective layer. Such a pattern may be spiral or circular to define the various tracks of the data storage device. As a further alternative, formatting may be provided by embossing one or more of the device substrates. Such embossing may serve a dual purpose of spacing and formatting. A cross sectional view of such a disk may be seen by reference to FIG. 6. While various layers such as electrodes, alignment layers and the like have been omitted for clarity, it can be seen that the cell includes substrates 92 and 94. Substrate 94 has embossed therein a plurality of recesses or grooves 96, which are in turn filled with a liquid crystal material 98. The various tracks of the device are defined, of course, by recesses 96.

It will be seen that embodiments of our image information and/or data recording devices incorporating a liquid crystal held have improved writing speed, higher red and infrared contrast, higher contrast small dots, and higher resolution when compared with known scattering devices. Such devices are nonetheless compatible with known data recording, projection and display systems.

## Claims

1. Apparatus for recording information, comprising: a liquid crystal cell, including first and second generally planar substrates disposed to define opposite sides of said cell, and a layer of a liquid crystal material of a smectic-A type of liquid crystal molecules and disposed between said first and second substrates; the apparatus being characterised in that said liquid crystal cell further includes homeotropic alignment means responsive to a first stimulation to produce a homeotropic alignment of said liquid crystal molecules with said molecules oriented substantially normal to said substrates, and homogeneous alignment means responsive to a second stimulation to produce a homogeneous alignment of said liquid crystal molecules with said molecules oriented substantially parallel to each other and to said substrates; and in that said apparatus further comprises first stimulation means adapted for operatively selectively stimulating said homeotropic alignment means in at least a portion of said liquid crystal material, and second stimulation means adapted for operatively selectively stimulating said homogeneous alignment means in at least a portion of said liquid crystal material.

2. Apparatus according to Claim 1, further characterised in that said homogeneous alignment means includes heating means disposed between said first and second substrates and adapted for generating heat in response to said second stimulation means.

3. Apparatus according to Claim 2, further characterised in that said second stimulation means includes light source means adapted for operatively directing a beam of light on to said cell.

4. Apparatus according to Claim 2, further characterised in that said heating means includes electrical resistance means for generating heat in response to passage of electric current therethrough, and said second stimulation means includes current supply and control means for controlling application of current to said resistance means in accordance with information to be recorded.

5. Apparatus according to Claim 1, further characterised in that said homogeneous alignment means includes first and second electrode means adapted for the operative generation of an electric field therebetween, and in that said second stimulation means includes electrical supply and control means adapted for operatively controlling application of electrical charge to said electrode means in accordance with information to be recorded.

6. Apparatus according to Claim 5, further characterised in that said first and second electrode means are disposed in an alternating arrangement within or adjacent said liquid crystal layer.

7. Apparatus according to Claim 1, further characterised in that said homeotropic alignment means includes field creating means adapted for operatively creating an electric field across said liquid crystal layer.

8. Apparatus according to Claim 7, further characterised in that said field creating means includes first and second electrode layers disposed on opposite sides of said liquid crystal layer, and said first stimulation means includes electrical supply and control means adapted for operatively controlling application of said electrical charge to said electrode layers.

9. Apparatus according to Claim 8, further characterised in that said first and second electrode layers are formed as continuous layers of a conductive material.

10. Apparatus according to Claim 8, further characterised in that said first and second electrode layers define an electrode matrix.

11. Apparatus according to Claim 8, further characterised in that said means for creating an electric field includes a layer of a photoelectric material disposed within said cell, said first stimulation means including means for selectively directing a beam of light on to said cell.

12. Apparatus according to Claim 1, further characterised in that said homeotropic alignment means includes heating means disposed between said first and second substrates and adapted for generating heat in response to said first stimulation means.

13. Apparatus according to Claim 12, further characterised in that said first stimulation means includes light source means adapted for operatively directing a beam of light on to said cell.

14. Apparatus according to Claim 1, further characterised in that alignment layer means are disposed between said first and second substrates for causing alignment in a predetermined direction of said molecules within said homogeneous alignment.

15. Apparatus for recording information, comprising a liquid crystal cell, including first and second substrates disposed to define opposite sides of said cell, and a layer of a liquid crystal material of a smectic-A type disposed between said first and second substrates; the apparatus being characterised in that said liquid crystal cell further includes heating means disposed between said first and second substrates and adapted for generating heat in response to stimulation to form written areas within said liquid crystal material; in that said apparatus further includes stimulating means for stimulating selected areas of said liquid crystal cell in accordance with the information to be recorded; and in that a birefringent effect is produced in said liquid crystal material whereby polarized light has the polarization thereof rotated by said written areas of said liquid crystal material.

16. Apparatus according to Claim 15, further characterised in that said stimulating means includes laser source means adapted for operatively generating a laser writing beam and for directing said writing beam on to said cell; laser modulating means adapted for operatively modulating said writing beam in accordance with image information to be written on to said cell; and laser scanning means adapted for operatively scanning said writing beam over a surface of said cell.

17. Apparatus according to any preceding claim, further characterised in that the thickness of said layer of liquid crystal material is not more than approximately 5 microns.

18. Apparatus for projecting an image, comprising a laser-addressable, liquid crystal cell, including first and second substrates disposed to define opposite sides of said cell and a layer of a liquid crystal material of a smectic-A type disposed between said first and second substrates; the apparatus being characterised in that said liquid crystal cell further includes means disposed between said first and second substrates and adapted for absorbing laser light of at least a first wavelength to thereby generate heat to form written areas within said liquid crystal material; in that a birefringent effect is produced in said liquid crystal material whereby polarized light of a wavelength other than said first wavelength has the polarization of said light rotated by said written areas of said liquid crystal material; and in that said apparatus further comprises first polarizing means positioned for operatively receiving and polarizing a beam of light of said other wavelength incident thereon and directing said beam on to said liquid crystal cell, and second polarizing means positioned for operatively receiving said beam of light from said liquid crystal cell and blocking from passing therethrough one of the portions of said beam of light which passes through said written areas of said cell and which passes through unwritten areas of said cell.

19. Apparatus according to Claim 18, further characterised in that said first and second polarizing means define therebetween a polarizing angle of 90°, whereby said second polarizing means passes therethrough light corresponding to said written areas of said cell.

20. Apparatus according to Claim 18, further characterised in that said first and second polarizing means define therebetween a polarizing angle of 0°, whereby said second polarizing means passes therethrough light corresponding to said unwritten areas of said cell.

21. Apparatus according to Claim 18, further characterised in that said liquid crystal cell is transmissive, and in that said polarization of said light is rotated by passing said light through said written areas of said liquid crystal material.

22. Apparatus according to Claim 18, further characterised in that said liquid crystal includes a reflective layer, and in that said polarization of said light is rotated by reflecting said light from said liquid crystal cell.

23. A liquid crystal cell of the smectic-A type characterised in that the thickness of the liquid crystal material is sufficiently thin that in the written state the material is essentially birefringent to transmitted or reflected light.

24. A liquid crystal cell of the smectic-A type characterised in that the thickness of the liquid crystal material is sufficiently thin that in the written state the molecules of the said material are generally aligned in a direction normal to the thickness of the material.

# FIG. 1

# FIG. 2

# FIG. 3

# FIG. 5

## FIG. 4A

## FIG. 4B

## FIG. 6